# FASCICULE DE BREVET EUROPEEN

(11) **EP 3 720 769 B1**
(45) Date de publication et mention de la délivrance du brevet: **08.06.2022**
(21) Numéro de dépôt: 18814602.1
(22) Date de dépôt: 07.12.2018
(51) Int. Cl.: B64D 1/22, B66C 1/36, F16F 1/12, F16F 3/04

(54) **DISPOSITIF D'ACCROCHAGE COMPORTANT UN SYSTÈME DE RAPPEL POUR CROCHET DE CHARGE**
HAKENVORRICHTUNG MIT EINEM RÜCKKEHRSYSTEM FÜR EINEN HEBEHAKEN
HOOKING DEVICE COMPRISING RETURN SYSTEM FOR LIFTING HOOK

(30) Priorité: 08.12.2017 FR 1761851
(43) Date de publication de la demande: 14.10.2020
(73) Titulaire: Lace, 36250 Saint-Maur (FR)
(72) Inventeur: AUTISSIER, Christophe, 36400 Briantes (FR); SCHMIDT, Yoann, 44350 Guerande (FR)
(74) Mandataire: Ipside
(86) Numéro de dépôt international: PCT/EP2018/084007
(87) Numéro de publication internationale: WO 2019/110812

(56) Documents cités:
- EP-A2- 1 767 808
- WO-A1-2010/119402
- FR-A1- 2 137 404
- GB-A- 890 178
- GB-A- 2 513 646
- JP-A- S5 364 356
- US-A- 3 741 558
- US-A1- 2014 059 901
- US-B1- 9 657 771
- US-B2- 9 562 581

## Description

### DOMAINE TECHNIQUE

La présente invention appartient au domaine des dispositifs d'accrochage de charges pour appareils de levage, elle concerne plus particulièrement un système de rappel pour les crochets de charge des dispositifs d'accrochage (ou *Cargo Hook* en terminologie anglo-saxonne) utilisés dans les hélicoptères.

### ÉTAT DE L'ART

Il est connu d'utiliser des ressorts dans les dispositifs d'accrochage pour rappeler en position les crochets de charge. Ce rappel correspond en général à la fermeture du crochet de charge après le largage de la charge transportée.

Les dispositifs d'accrochage comportent à cet effet un ressort, le plus souvent de traction, monté entre le boîtier du dispositif d'accrochage et le crochet de charge.

Le document GB 2513646 A décrit un dispositif d'accrochage comportant un tel ressort de rappel, le ressort est placé de façon horizontale entre un point d'attache du boîtier et un point d'attache du crochet situé au niveau de l'axe de basculement dudit crochet. Cette disposition induit une distorsion du ressort lorsque celui-ci travaille pour rappeler le crochet ouvert à sa position de fermeture. Le ressort ne travaille donc pas en traction compression uniquement et peut être sujet à une rupture ou à un dommage prématuré pour lequel il n'a pas été dimensionné.

Le document FR 2137404 décrit également un crochet de charge équipé d'un ressort de rappel incliné reliant le crochet au boîtier.

Les solutions existantes présentent d'autres inconvénients comme une raideur limitée qui ne sécurise pas au maximum la fermeture du crochet de charge, et une partie du ressort, tout au moins, située à l'extérieur du boîtier et du crochet et directement exposée aux agressions externes comme le sable et l'humidité.

D'un autre côté, les ressorts de rappel équipant les dispositifs d'accrochage ne sont pas réglables en précontrainte. Ils présentent une même raideur effective qui ne peut être modifiée en fonction des besoins de la mission par exemple.

### PRÉSENTATION DE L'INVENTION

L'invention concerne en particulier un dispositif d'accrochage qui apporte une amélioration aux systèmes existants en regard des problèmes évoqués supra.

L'invention concerne un dispositif d'accrochage de charges pour appareil de levage comportant un système de rappel, un boîtier et un crochet de charge monté pivotant par rapport au boîtier, le système de rappel comportant un moyen élastique monté entre une tige solidaire dudit boîtier et un maneton fixé au crochet de charge, ledit système de rappel étant apte à exercer une force de rappel sur le crochet de charge pour permettre la fermeture du crochet de charge.

Le système de rappel comporte en outre un dispositif de réglage de la force de rappel du moyen élastique.

Il est ainsi obtenu un dispositif d'accrochage de charges avec un système de rappel du crochet de charge dont la force de rappel peut être réglée et modifiée sans changer d'élément du système de rappel ni du dispositif d'accrochage.

Dans une forme de réalisation, le dispositif de réglage de la force de rappel du moyen élastique comporte une plaquette reliée au moyen élastique et une bielle coopérant avec ladite plaquette, la bielle traversant un trou de la plaquette et comportant une partie filetée reliée au maneton et un écrou de réglage vissé sur une portion de la partie filetée, l'écrou de réglage prenant appui sur la plaquette, le serrage de l'écrou de réglage permettant de régler une élongation du moyen élastique.

Il est ainsi obtenu de régler une pré-tension du moyen élastique pour notamment garantir l'intensité minimal de la force de rappel.

Dans une forme de réalisation, le moyen élastique comporte au moins un ressort de traction.

Dans une forme particulière de réalisation, le moyen élastique comporte au moins deux ressorts de traction montés en parallèle. Un tel montage améliore la sécurité du rappel du crochet en cas de défaillance d'un ressort.

Dans une forme de réalisation mettant en oeuvre un ou des ressorts de traction, chaque ressort de traction est à spires jointives, lorsqu'il n'est pas soumis à une force d'allongement, et comporte un crochet supérieur par lequel ledit ressort est suspendu dans une gorge de la tige.

Dans une forme de réalisation mettant en oeuvre des ressorts de traction, chaque ressort de traction comporte un crochet inférieur qui coopère avec des évidements réalisés dans la plaquette, ladite plaquette étant suspendue aux ressorts de traction.

Dans une forme de réalisation, la bielle comporte une partie incurvée se terminant par un trou traversé par le maneton, le maneton et la bielle formant une liaison pivot glissant.

Dans une forme de réalisation de ce dispositif d'accrochage, le crochet de charge est monté pivotant autour d'un axe de basculement et comporte un évidement dans lequel est logée une partie du système de rappel, l'évidement présentant une longueur qui permet le basculement du crochet de charge entre une position fermée et une position ouverte en présence de la partie du système de rappel dans ledit évidement.

Il est ainsi assuré que le système de rappel fonctionne de manière correcte en traction.

Dans une forme de réalisation du dispositif d'accrochage, le crochet de charge est fixé au maneton du système de rappel suivant un axe déporté par rapport à l'axe de basculement du crochet de charge.

### BRÈVE DESCRIPTION DES FIGURES

Les différentes figures ainsi que les éléments d'une même figure ne sont pas nécessairement représentés à la même échelle. Sur l'ensemble des figures, les éléments identiques portent le même repère.

Il est ainsi illustré en :
- Figure 1 : une vue partielle en perspective d'un dispositif d'accrochage équipé d'un système de rappel du crochet selon un mode de réalisation de l'invention ;
- Figure 2 : une vue en perspective du système de rappel de la figure 1 ;
- Figure 3 : une vue en perspective du système de rappel couplé au crochet du dispositif d'accrochage ;
- Figure 4 : une autre vue en perspective du système de rappel couplé au crochet, le crochet étant en transparence pour permettre la visualisation de la bielle et du maneton du système de rappel ;
- Figures 5a et 5b : des schémas du système de rappel lorsque le crochet de charge est fermé, figure 5a, et lorsque celui-ci est ouvert, figure 5b.

### DESCRIPTION DÉTAILLÉE DE MODES DE RÉALISATION

Dans le mode de réalisation décrit ci après, on fait référence à un dispositif d'accrochage destiné principalement au transport de charges par hélicoptère. Cet exemple n'est nullement exclusif d'applications au levage et transport de charges par d'autres appareils.

Un tel dispositif d'accrochage est usuellement lié à un hélicoptère qui comporte à cette fin des moyens de fixation comme par exemple une chape, un palier ou des perçages. Le dispositif d'accrochage permet alors la suspension de la charge devant être transportée, et ce par l'intermédiaire d'un accessoire de levage comme un anneau ou une manille.

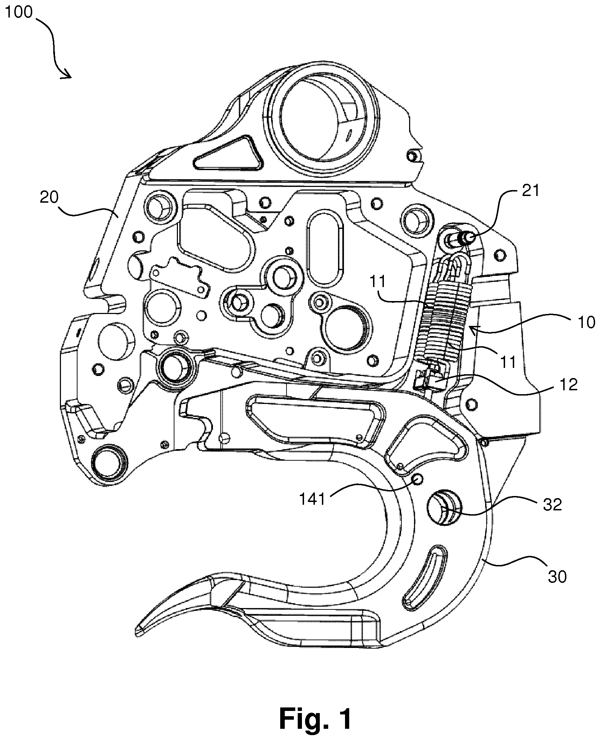

La figure 1 représente en vue partielle un dispositif d'accrochage 100 comportant un système de rappel 10, un boîtier 20 et un crochet de charge 30, le crochet de charge étant monté pivotant dans le boîtier 20 et le système de rappel 10 permettant de rappeler le crochet de charge 30 en position par rapport au boîtier. Le dispositif d'accrochage comporte en outre d'autres composants qui ne coopèrent pas directement avec le système de rappel 10, objet de la présente invention, et qui sont connus de l'homme du métier tels que le cliquet de sécurité et le mécanisme de verrouillage déverrouillage du crochet de charge. Ces éléments ne sont pas représentés sur les dessins.

Le système de rappel 10 est placé entre une tige transversale 21 solidaire du boîtier 20 et le crochet de charge 30, ladite tige transversale est agencée perpendiculairement à un plan frontal dudit boîtier.

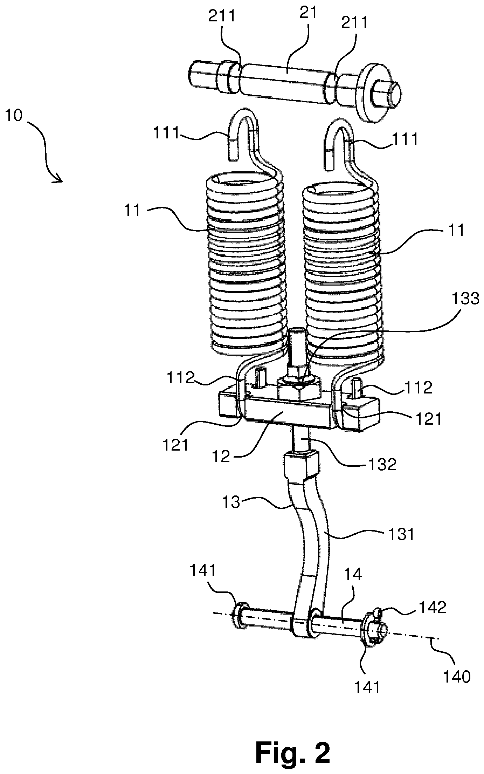

La figure 2 représente le système de rappel 10 selon un exemple de réalisation de l'invention, le système de rappel comporte principalement deux ressorts de traction 11, une plaquette rectangulaire 12, une bielle 13 et un maneton transversal 14.

Selon l'exemple de réalisation illustré, les ressorts de traction 11 sont montés en parallèle entre la tige transversale 21 et la plaquette rectangulaire 12, chacun desdits ressorts étant un ressort à spires jointives comportant un crochet supérieur 111 et un crochet inférieur 112.

La tige transversale 21 comporte deux gorges 211 adaptées au maintien des crochets supérieurs 111 des ressorts 11. Ainsi les ressorts de traction 11 sont suspendus à la tige transversale 21 par l'intermédiaire des crochets supérieurs 111 dont chacun est placé dans une gorge 211 de ladite tige transversale. Les gorges 211 limitent le jeu transversal des ressorts de traction 11 par rapport à la tige transversale 21.

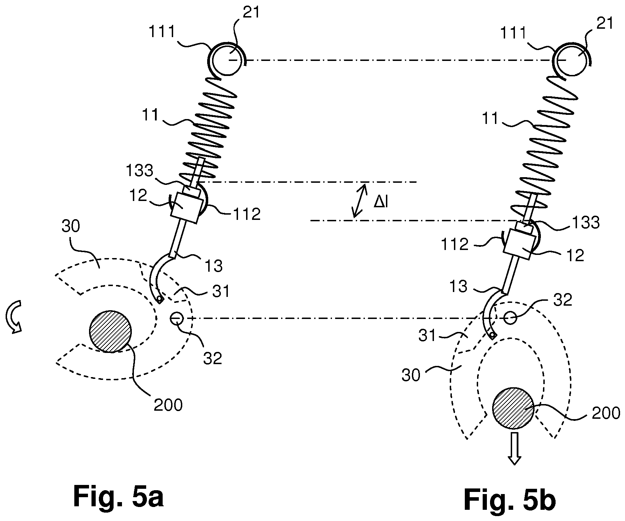

Sur l'ensemble des figures sauf les figures 5a et 5b, les ressorts de traction 11 sont représentés au repos, et donc séparés de la tige transversale 21 à laquelle ils sont normalement suspendus en étant tendus, pour mieux rendre compte de leur élongation, ou longueur, à vide.

Les ressorts 11 sont montés tendus, ou précontraints, entre le boîtier 20 et le crochet de charge 30 afin de sécuriser la position fermée du crochet de charge grâce à une force de rappel exercée en permanence sur ledit crochet de charge.

La plaquette rectangulaire 12, selon l'exemple de réalisation illustré, est suspendue aux ressorts de traction 11 par l'intermédiaire de dégagements 121 réalisés à cet effet dans ladite plaquette rectangulaire. Chaque crochet inférieur 112 est placé dans deux dégagements 121 en vis-à-vis à une extrémité de la plaquette rectangulaire 12, chaque dégagement étant une rainure latérale débouchant entre une face inférieure et une face supérieure de ladite plaquette rectangulaire.

La bielle 13, selon l'exemple de réalisation illustré, comporte une partie incurvée 131 et une partie filetée 132 droite, la partie filetée est insérée dans un trou central de la plaquette rectangulaire 12 et est fixée à ladite plaquette par un écrou de réglage 133 qui vient se visser sur le filetage de ladite partie filetée. L'ensemble formé de l'écrou de réglage 133 et de la partie filetée 132 permet de régler la précontrainte des ressorts de traction 11 en ajustant la distance entre la tige transversale 21 et la plaquette 12.

En effet, le serrage de l'écrou de réglage 133 produit un déplacement vers le bas de la plaquette rectangulaire 12 augmentant ainsi l'élongation des ressorts de traction 11 suspendus à la tige transversale 21. L'utilité de ce réglage de précontrainte sera détaillée plus loin dans la description.

La partie incurvée 131 de la bielle 13 est reliée au maneton 14, ledit maneton étant monté en pivot glissant, d'axe 140, dans un trou ménagé dans l'extrémité libre de ladite partie incurvée.

Le maneton 14, selon l'exemple de réalisation illustré, est monté dans le crochet de charge 30, immobilisé en translation par rapport audit crochet de charge mais libre en rotation autour de son axe 140.

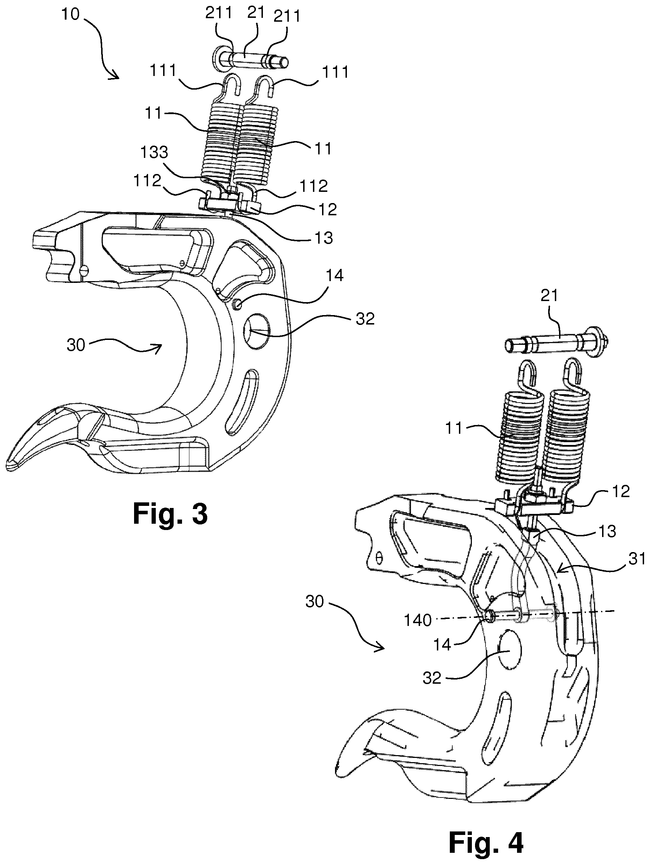

Les figures 3 et 4 représentent le système de rappel 10 couplé au crochet de charge 30. Le crochet de charge 30 comprend un évidement 31, visible sur la figure 4, adapté au montage de la bielle 13 et du maneton 14 dans ledit crochet de charge.

De façon connue, le crochet de charge 30 est monté pivotant dans le boîtier 20 par rapport à un axe de basculement 32.

L'évidement 31 du crochet de charge 30 présente une longueur utile autorisant le débattement de la bielle 13 dans ledit évidement lorsque le crochet de charge 30 pivote autour de son axe de basculement 32. L'évidement 31 présente en outre une largeur autorisant un jeu transversal déterminé de la bielle 13 montée en pivot glissant par rapport au maneton 14.

Le maneton 14, selon l'exemple de réalisation illustré, comporte un collet 141 à chacune de ses extrémités, les collets 141 bloquant, à un jeu fonctionnel près, le système de rappel 10 dans le crochet de charge 30.

Selon un exemple de réalisation, un des collets 141 est démontable pour permettre le retrait du maneton 14 du crochet 30, et est donc bloqué par une goupille 142 comme représenté à la figure 2.

La figure 5a représente schématiquement le système de rappel 10 juste avant l'ouverture du crochet 30, l'ouverture dudit crochet étant commandée par un mécanisme de verrouillage déverrouillage non représenté. Les ressorts 11 présentent dans ce cas une élongation initiale préalablement réglée avec l'écrou de réglage 133.

La figure 5b représente schématiquement l'état du système de rappel 10 lorsque le crochet de charge 30 est en position ouverte, la position ouverte correspondant au largage d'une charge non représentée accrochée via un accessoire de levage 200. Lorsque le crochet de charge 30 est déverrouillé, l'effort que la charge exerce sur lui entraine son basculement vers le bas autour de son axe de basculement 32. Ce basculement produit une translation circulaire du maneton 14, dont l'axe 140 est déporté par rapport à l'axe de basculement 32, autour de l'axe de basculement 32, à l'image du mouvement d'une nacelle de roue de manège. Le mouvement du maneton entraîne un déplacement de la bielle 13 et de la plaquette 12 du système de rappel 10, induisant ainsi une élongation des ressorts 11 d'une longueur Δl par rapport à leur élongation initiale.

Dès lors que le crochet de charge est totalement libéré de l'accessoire de levage, ledit crochet bascule vers le haut tiré par le maneton sous l'effet de l'effort de rappel exercé par le système de rappel sur ledit crochet de charge.

Au vu de la loi de proportionnalité entre l'effort de rappel et l'élongation dans un ressort, plus les ressorts 11 sont allongés plus l'effort de rappel exercé sur le crochet est important. De ce fait, le serrage de l'écrou de réglage 133 permet d'augmenter l'élongation initiale des ressorts et donc d'augmenter l'effort de rappel desdits ressorts. Ce réglage permet par exemple d'augmenter ou de diminuer la vitesse de fermeture du crochet en fonction de la masse de celui-ci.

Outre la répartition d'efforts, un autre avantage de la présente invention est la stabilité conférée par deux ressorts agencés en parallèle au lieu d'un seul ressort comme il est d'usage dans les dispositifs d'accrochage connus.

En effet, cette disposition, avec quatre points d'attaches qui sont les crochets supérieurs 111 et inférieurs 112 des deux ressorts 11, rend le système hyperstatique. De plus, le montage en parallèle des ressorts permet d'obtenir un système avec une raideur équivalente qui est la somme des raideurs.

Cependant, cette disposition n'est nullement obligatoire et le système de rappel selon l'invention peut fonctionner avec un seul ressort à condition que la précontrainte dudit ressort soit réglable par l'intermédiaire d'un écrou qui vient se visser sur une partie filetée solidaire du ressort tel que décrit, ou par tout autre moyen à disposition de l'homme du métier.

## Revendications

1. Dispositif d'accrochage (100) de charges pour appareil de levage, comportant un système de rappel (10), un boîtier (20) et un crochet de charge (30) monté pivotant par rapport au boîtier, le système de rappel comportant un moyen élastique (11) monté entre une tige (21) solidaire dudit boîtier et un maneton (14) fixé audit crochet de charge, ledit système de rappel étant apte à exercer une force de rappel sur le crochet de charge pour permettre la fermeture dudit crochet de charge, **caractérisé en ce que** ledit système de rappel comporte un dispositif de réglage (12, 13) de la force de rappel du moyen élastique (11).

2. Dispositif d'accrochage selon la revendication 1, dans lequel le dispositif de réglage (12, 13) de la force de rappel du moyen élastique (11) comporte une plaquette (12) reliée au moyen élastique et une bielle (13) coopérant avec ladite plaquette, la bielle traversant un trou de la plaquette et comportant une partie filetée (132) reliée au maneton (14) et un écrou de réglage (133) vissé sur une portion de ladite partie filetée, l'écrou de réglage (133) prenant appui sur la plaquette (12), le serrage dudit écrou de réglage permettant de régler une élongation du moyen élastique (11).

3. Dispositif d'accrochage selon la revendication 1 ou la revendication 2, dans lequel le moyen élastique (11) comporte au moins un ressort de traction.

4. Dispositif d'accrochage selon l'une quelconque des revendications précédentes, dans lequel le moyen élastique (11) comporte au moins deux ressorts de traction montés en parallèle.

5. Dispositif d'accrochage selon la revendication 3 ou la revendication 4, dans lequel chaque ressort de traction est à spires jointives et comporte un crochet supérieur (111) par lequel ledit ressort est suspendu dans une gorge (211) de la tige (21).

6. Dispositif d'accrochage selon la revendication 4 lorsqu'elle dépend de la revendication 2, dans lequel chaque ressort de traction comporte un crochet inférieur (112) qui coopère avec des évidements (121) réalisés dans la plaquette (12), ladite plaquette étant suspendue aux ressorts de traction.

7. Dispositif d'accrochage selon la revendication 2, dans lequel la bielle (13) comporte une partie incurvée (131) se terminant par un trou traversé par le maneton (14), ledit maneton et ladite bielle formant une liaison pivot glissant.

8. Dispositif d'accrochage selon l'une quelconque des revendications précédentes, dans lequel le crochet de charge (30) est monté pivotant autour d'un axe de basculement (32) et comporte un évidement (31) dans lequel est logée une partie du système de rappel (10), l'évidement présentant une longueur qui permet le basculement du crochet de charge entre une position fermée et une position ouverte en présence de la partie du système de rappel dans ledit évidement.

9. Dispositif d'accrochage selon l'une quelconque des revendications précédentes, dans lequel le crochet de charge (30) est fixé au maneton (14) du système de rappel suivant un axe (140) déporté par rapport à l'axe de basculement (32) dudit crochet de charge.

## Patentansprüche

1. Lastanschlagvorrichtung (10) für ein Hebegerät, das ein Rückstellsystem (10), ein Gehäuse (20) und einen Lasthaken (30) beinhaltet, der in Bezug auf das Gehäuse schwenkbar montiert ist, wobei das Rückstellsystem ein elastisches Mittel (11), das zwischen einer Stange (21), die fest mit dem Gehäuse verbunden ist, und einem Kurbelzapfen (14), der an dem Lasthaken befestigt ist, beinhaltet, wobei das Rückstellsystem imstande ist, eine Rückstellkraft auf den Lasthaken auszuüben, um das Schließen des Lasthakens zu ermöglichen, **dadurch gekennzeichnet, dass** das Rückstellsystem eine Einstellvorrichtung (12, 13) der Rückstellkraft des elastischen Mittels (11) beinhaltet.

2. Anschlagvorrichtung nach Anspruch 1, wobei die Einstellvorrichtung (12, 13) der Rückstellkraft des elastischen Mittels (11) eine kleine Platte (12), die mit dem elastischen Mittel verbunden ist, und eine Kurbelstange (13), die mit der kleinen Platte zusammenwirkt, beinhaltet, wobei die Kurbelstange ein Loch der kleinen Platte durchquert und einen Teil mit Gewinde (132), der mit dem Kurbelzapfen (14) verbunden ist, und eine Einstellmutter (133), die an einem Abschnitt des Teils mit Gewinde verschraubt ist, beinhaltet, wobei die Einstellmutter (133) an der kleinen Platte (12) anliegt, wobei das Festziehen der Einstellmutter ermöglicht, eine Dehnung des elastischen Mittels (11) einzustellen.

3. Anschlagvorrichtung nach Anspruch 1 oder Anspruch 2, wobei das elastische Mittel (11) mindestens eine Zugfeder beinhaltet.

4. Anschlagvorrichtung nach einem der vorstehenden Ansprüche, wobei das elastische Mittel (11) mindestens zwei Zugfedern beinhaltet, die parallel montiert sind.

5. Anschlagvorrichtung nach Anspruch 3 oder Anspruch 4, wobei jede Zugfeder mit aneinander liegenden Windungen ist und einen oberen Haken (111) beinhaltet, an dem die Feder in einer Nut (211) der Stange (21) aufgehängt ist.

6. Anschlagvorrichtung nach Anspruch 4, wenn von Anspruch 2 abhängig, wobei jede Zugfeder einen unteren Haken (112) beinhaltet, der mit Aussparungen (121) zusammenwirkt, die in der kleinen Platte (12) ausgeführt sind, wobei die kleine Platte an den Zugfedern aufgehängt ist.

7. Anschlagvorrichtung nach Anspruch 2, wobei die Kurbelstange (13) einen gekrümmten Teil (131) beinhaltet, der durch ein Loch abschließt, das von dem Kurbelzapfen (14) durchquert wird, wobei der Kurbelzapfen und die Kurbelstange eine Gleitschwenkverbindung bilden.

8. Anschlagvorrichtung nach einem der vorstehenden Ansprüche, wobei der Lasthaken (30) um eine Kippachse (32) herum schwenkbar montiert ist, und eine Aussparung (31) beinhaltet, in der ein Teil des Rückstellsystems (10) untergebracht ist, wobei die Aussparung eine Länge aufweist, die das Kippen des Lasthakens zwischen einer geschlossenen Position und einer offenen Position bei Vorhandensein des Teils des Rückstellsystems in der Aussparung ermöglicht.

9. Anschlagvorrichtung nach einem der vorstehenden Ansprüche, wobei der Lasthaken (30) an dem Kurbelzapfen (14) des Rückstellsystems entlang einer in Bezug auf die Kippachse (32) des Lasthakens ausgelagerten Achse (140) befestigt ist.

## Claims

1. Load hooking device (100) for a lifting apparatus, including a return system (10), a housing (20) and a load hook (30) mounted so as to pivot relative to the housing, the return system including an elastic means (11) mounted between a rod (21) secured to said housing and a crank pin (14) fixed to said load hook, said return system being capable of exerting a return force on the load hook in order to allow said load hook to be closed, **characterised in that** said return system includes a device (12, 13) for adjusting the return force of the elastic means (11).

2. Hooking device according to claim 1, wherein the adjustment device (12, 13) of the return force of the elastic means (11) includes a plate (12) connected to the elastic means and a connecting rod (13) cooperating with said plate, the connecting rod passing through a hole in the plate and including a threaded portion (132) connected to the crank pin (14) and an adjusting nut (133) screwed onto a part of said threaded portion, the adjustment nut (133) resting on the plate (12), the tightening of said adjusting nut making it possible to adjust an elongation of the elastic means (11).

3. Hooking device according to claim 1 or claim 2, wherein the elastic means (11) includes at least one tension spring.

4. Hooking device according to any of the preceding claims, wherein the elastic means (11) includes at least two tension springs mounted in parallel.

5. Hooking device according to claim 3 or claim 4, wherein each tension spring has contiguous coils and includes an upper hook (111) by which said spring is suspended in a groove (211) of the rod (21).

6. Hooking device according to claim 4, when dependent on claim 2, wherein each tension spring includes a lower hook (112) which cooperates with recesses (121) made in the plate (12), said plate being suspended from the tension springs.

7. Hooking device according to claim 2, wherein the connecting rod (13) includes a curved part (131) ending with a hole traversed by the crank pin (14), said crank pin and said connecting rod forming a sliding pivot connection.

8. Hooking device according to any of the preceding claims, wherein the load hook (30) is pivotably mounted about a tilting axis (32) and includes a recess (31) in which a part of the return system (10) is housed, the recess having a length which allows the load hook to be tilted between a closed position and an open position in the presence of the part of the return system in said recess.

9. Hooking device according to any of the preceding claims, wherein the load hook (30) is fixed to the crank pin (14) of the return system along an axis (140) offset with respect to the tilting axis (32) of said load hook.
